# EUROPÄISCHE PATENTSCHRIFT

(11) **EP 3 600 971 B1**
(45) Veröffentlichungstag und Bekanntmachung des Hinweises auf die Patenterteilung: **23.02.2022**
(21) Anmeldenummer: 18714456.3
(22) Anmeldetag: 15.03.2018
(51) Int. Cl.: B60R 13/00, B60R 13/02, B29C 45/16

(54) **ANZEIGEELEMENT, VERFAHREN ZUR HERSTELLUNG EINES ANZEIGEELEMENTS UND VERWENDUNG EINES ANZEIGEELEMENTS UND FAHRZEUG MIT EINEM ANZEIGEELEMENT**
DISPLAY ELEMENT, METHOD FOR PRODUCTION OF A DISPLAY ELEMENT AND USE OF A DISPLAY ELEMENT AND VEHICLE HAVING A DISPLAY ELEMENT
ÉLÉMENT D'AFFICHAGE, PROCÉDÉ SERVANT À FABRIQUER UN ÉLÉMENT D'AFFICHAGE ET UTILISATION D'UN ÉLÉMENT D'AFFICHAGE ET VÉHICULE COMPRENANT UN ÉLÉMENT D'AFFICHAGE

(30) Priorität: 28.03.2017 DE 102017205246
(43) Veröffentlichungstag der Anmeldung: 05.02.2020
(73) Patentinhaber: Bayerische Motoren Werke Aktiengesellschaft, 80809 München (DE)
(72) Erfinder: HAIRER, Gabriel, 80807 München (DE); STROLZ, Michael, 80809 München (DE)
(86) Internationale Anmeldenummer: PCT/EP2018/056529
(87) Internationale Veröffentlichungsnummer: WO 2018/177761

(56) Entgegenhaltungen:
- EP-A1- 2 765 570
- EP-A2- 1 248 275
- WO-A1-2015/154939
- DE-A1-102007 057 934
- DE-A1-102011 055 973
- DE-A1-102012 015 436
- DE-A1-102012 101 315
- DE-A1-102015 003 448
- DE-T2- 69 102 354
- DE-U1-202015 103 830
- JP-A- H03 208 616
- JP-A- 2000 215 748

## Beschreibung

Die vorliegende Erfindung betrifft ein Anzeigeelement, insbesondere für Fahrzeuge, sowie ein Verfahren zur Herstellung eines solchen Anzeigeelements als auch die Verwendung eines solchen Anzeigeelements und ein Fahrzeug mit einem Anzeigeelement.

Keramikbasierte Materialien finden weitläufig Anwendung als Anzeigeelemente von Betätigungsvorrichtungen, wie beispielsweise Gangwahlschaltern in Fahrzeugen. Derartige Keramikmaterialien verleihen den Betätigungsvorrichtungen eine angenehme Haptik und zudem eine hochwertige Optik. Allerdings sind Keramikkomponenten teuer, weswegen für die Darstellung der Anzeigesymboliken häufig zusätzliche Kunststoffkomponenten verwendet werden. Hierzu werden mit Symbolen bedruckte Folien, die einen Kratzschutz aufweisen, auf Keramikoberflächen geklebt. Die Herstellung solcher Anzeigeelemente ist umständlich und erfüllt nicht die Anforderungen an eine dauerhafte mechanische Stabilität. Ferner sind Anzeigeelemente von Betätigungsvorrichtungen in Fahrzeugen bekannt, bei denen Kunststoffsymboliken mittels Spritzguss in entsprechende symbolförmige Aussparungen von Keramikoberflächen eingebracht werden. Dies bringt jedoch mehrere Nachteile mit sich. Zum einen ist ein hoher Entwicklungsaufwand nötig und die optische Wertigkeit dieser Symboliken ist zudem nicht gegeben, da die Keramikstege sichtbar sind. Weiterhin verursacht die Erzeugung der symbolförmigen Aussparungen in den Keramikoberflächen einen hohen Ausschuss der Keramikmaterialien. Außerdem ist die Stabilität dieser Anzeigeelemente gering, da die Keramikstege, beispielsweise das Dreieck im Buchstaben "A", leicht brechen. Durch die scharfen Kanten, die an der Keramikoberfläche bei der Erzeugung der symbolförmigen Aussparungen entstehen, ist auch ein zusätzlicher Prozessschritt des Schleifens notwendig. Dies führt auch zu höheren Werkzeugkosten. DE102013214544 A1 beschreibt ein Keramikformteil in Form eines Anzeigeelements, bei dem eine Aussparung in Form einer Symbolik und eine Intarsie in Plättchenform verwendet werden. Hier werden die Nachteile der Keramikstege dadurch gelöst, dass eine Intarsie in Form eines Plättchens, wie zum Beispiel das Dreieck im Buchstaben "A", durch den Kunststoff für die symbolförmige Aussparung hinterspritzt wird. Allerdings sind derartige Intarsien bei geringer mechanischer Belastbarkeit sehr kostenaufwändig und lediglich mit hohem technischen Aufwand herzustellen.

DE 10 2007 057934 A1 beschreibt ein Verfahren zum Herstellen eines auf zumindest einer Fläche kunststoffbeschichteten metallischen Bauteils, bei dem ein Blech zwecks Umformung zum Bauteil tiefgezogen wird und das tiefgezogene Blech in eine Spritzgußform eingebracht und auf einer Fläche, insbesondere auf seiner Rückseite, mit Kunststoffmaterial hinterspritzt wird. Nach dem Hinterspritzen des Blechs mit einer Schicht aus Kunststoffmaterial verbleibt das Bauteil in der Spritzgußform und wird mit mindestens einem weiteren Kunststoffmaterial, das in einen durch einen Schieber oder eine Wechselkavität der Spritzgußform begrenzten Formraum eingespritzt wird, hinterspritzt und/oder umspritzt unter Bildung eines materialeinheitlichen Tragteilsan dem mit Kunststoff hinterspritzten Blech.

Ausgehend von diesem Stand der Technik ist es daher eine Aufgabe der vorliegenden Erfindung, ein Anzeigeelement, insbesondere für Fahrzeuge anzugeben, das optisch und haptisch hochwertig ist, sich durch eine hohe mechanische Stabilität auszeichnet sowie kostengünstig und ohne hohen Entwicklungsaufwand, hohe Werkzeugkosten oder hohen Materialausschuss herstellbar ist. Ferner ist es eine Aufgabe der vorliegenden Erfindung, ein Verfahren zur Herstellung eines Anzeigeelements anzugeben, das in wenigen kostengünstigen Verfahrensschritten mit einer hohen Variabilität hinsichtlich Muster, Farben und Designs ein optisch und haptisch hochwertiges Anzeigeelement mit hoher mechanischer Stabilität erzeugt. Darüber hinaus ist es eine Aufgabe der vorliegenden Erfindung ein Fahrzeug mit einem Anzeigeelement und eine Verwendung eines Anzeigeelements anzugeben.

Die Aufgabe wird durch ein erfindungsgemäßes Anzeigeelement für Fahrzeuge gemäß Anspruch 1 gelöst. Das Anzeigeelement umfasst ein Dekorelement und ein Mehrkomponenten-Kunststoffelement, wobei das Mehrkomponenten-Kunststoffelement mit dem Dekorelement verbunden ist. Das Dekorelement dient dabei als Träger bzw. Grundkörper für das Integrieren einer Anzeigefunktion durch das Mehrkomponenten-Kunststoffelement.

Das Mehrkomponenten-Kunststoffelement dient zur Darstellung der Symboliken für das Anzeigeelement. Das Mehrkomponenten-Kunststoffelement kann beispielsweise formschlüssig in eine Aussparung des Dekorelements eingefasst sein oder das Dekorelement formschlüssig einfassen, wobei eine Kombination davon ebenfalls möglich ist. Alternativ ist auch eine stoffschlüssige und/oder kraftschlüssige Verbindung zwischen dem Mehrkomponenten-Kunststoffelement und dem Dekorelement möglich. Beliebige Kombinationen aus den vorstehend genannten Verbindungstechniken können ebenfalls Anwendung finden.

Die Verwendung eines Mehrkomponenten-Kunststoffelements verhindert auch einen größeren Materialausschuss des teureren Dekorelements, da weniger Bearbeitungsschritte am Dekorelement notwendig sind, und trägt somit dazu bei, dass das Anzeigeelement kostengünstiger herstellbar ist. Das Mehrkomponenten-Kunststoffelement ist in Form und Gestalt im Wesentlichen nicht beschränkt und kann auch großflächig ausgebildet sein, was die Vorbearbeitungsnotwendigkeit des Dekorelements mit Spezialwerkzeugen, wie etwa kleinen Fräsen oder Lasern, verringert, wodurch Werkzeugkosten eingespart werden.

Um auch die Anforderungen an eine hohe mechanische Stabilität zu erfüllen, weist das Mehrkomponenten-Kunststoffelement eine erste und eine zweite Kunststoffkomponente auf. Die zweite Kunststoffkomponente ist in Form von gespritzten Symboliken sichtbar an einer Oberseite des Anzeigeelements freiliegend. Die zweite Kunststoffkomponente ist von der ersten Kunststoffkomponente umgeben, wodurch beispielsweise eine mechanisch sehr stabile formschlüssige und/oder stoffschlüssige Verbindung bereitgestellt werden kann, die beispielsweise auch nach häufiger mechanischer Belastung des Anzeigeelements vorhanden bleibt. Beispielsweise kann eine solche Belastung durch den Finger eines Benutzers, wenn das Anzeigeelement beispielsweise ein Knopf ist, der mit einer Bedienfunktion gekoppelt ist, ausgeübt werden. Hierdurch kann z.B. das Dreieck in dem Buchstaben "A" mit einer hohen mechanischen Stabilität realisiert werden.

Dabei kann die zweite Kunststoffkomponente bündig mit der Oberseite der ersten Kunststoffkomponente, exponiert gegenüber der Oberseite der ersten Kunststoffkomponente oder vertieft gegenüber der Oberseite der ersten Kunststoffkomponente angeordnet sein, solange sie an der Oberseite des Anzeigeelements freiliegt und von der ersten Kunststoffkomponente umgeben ist. Dies wertet sowohl die Haptik als auch die Optik des Anzeigeelements auf und lässt Raum für unterschiedliche Gestaltungsmöglichkeiten.

Das Mehrkomponenten-Kunststoffelement besteht aus zwei Komponenten.

Die erste und die zweite Kunststoffkomponente sind jeweils gespritzt, was beispielsweise mit einem bekannten Spritzgussverfahren realisiert werden kann. Dadurch können präzise ausgearbeitete Symboliken verschiedener Größen mit exakten Kontrasten zwischen der ersten und der zweiten Kunststoffkomponente schnell, einfach und variabel ohne aufwändigen Austausch der Prozesswerkzeuge oder Entwicklungsanpassungen realisiert werden. Dadurch werden die Herstellungs- und Entwicklungskosten für das erfindungsgemäße Anzeigeelement gesenkt. Weiterhin werden durch die gespritzten Symboliken und die resultierenden Kontraste, wie auch durch den Übergang zwischen dem Mehrkomponenten-Kunststoffelement und dem Dekorelement, ansprechende hochwertige optische und haptische Strukturen erzeugt.

Die erste und die zweite Kunststoffkomponente weisen jeweils unterschiedliche Farben auf. So kann eine Vielzahl von Farbabstufungen und Kontrasten für das erfindungsgemäße Anzeigeelement realisiert werden. Durch die einfache und beliebige Anpassbarkeit der Kunststoffkomponenten hinsichtlich ihrer Farbigkeit, insbesondere im Spritzgussverfahren, ist somit eine hohe Designvariabilität möglich.

Durch die Struktur und Ausgestaltung der Elemente des erfindungsgemäßen Anzeigeelements ist dieses optisch und haptisch hochwertig, mechanisch sehr stabil und kostengünstig sowie einfach und ohne hohe Werkzeugkosten, ohne hohen Materialausschuss und ohne hohen Entwicklungsaufwand herstellbar. Des Weiteren zeichnet sich das erfindungsgemäße Anzeigeelement durch eine hohe Designvariabilität aus, was eine universelle Anwendung als Anzeigeelement, insbesondere in Fahrzeugen ermöglicht.

Die Unteransprüche haben vorteilhafte Weiterbildungen und Ausgestaltungen der Erfindung zum Inhalt.

Gemäß einer vorteilhaften Weiterbildung umfasst das Dekorelement Keramik, Holz, Holzfurnier, Glas, Stein oder eine Kombination davon. Dekorelemente aus den vorstehend angeführten Materialien sind sehr gut verarbeitbar und erzeugen Dekorelemente mit angenehmen haptischen und ansprechenden optischen Eigenschaften bei sehr guter mechanischer Stabilität.

Weiter vorteilhaft besteht das Dekorelement aus Keramik. Dadurch kann das erfindungsgemäße Anzeigeelement besonders hohe optische und haptische Qualitätsansprüche erfüllen und ist zudem durch eine sehr gute dauerhafte mechanische Stabilität gekennzeichnet.

Eine weitere vorteilhafte Weiterbildung zeichnet sich dadurch aus, dass die zweite Kunststoffkomponente schwarz und die erste Kunststoffkomponente weiß ist oder die erste Kunststoffkomponente schwarz und die zweite Kunststoffkomponente weiß ist. Hierbei kann ein maximaler farblicher Kontrast geschaffen werden, der je nach individuellem Bedarf des Benutzers die Symboliken unterschiedlich betont. Mit anderen Worten kann gewählt werden, ob weiß auf schwarz oder schwarz auf weiß bevorzugt ist. Durch Verwendung von Spritzgusstechnik kann der Kontrast weiter geschärft werden.

Um eine möglichst hohe Designvariabilität für das erfindungsgemäße Anzeigeelement zu schaffen, umfassen die gespritzten Symboliken vorteilhaft einen Buchstaben, eine Abbildung, eine Zahl oder Kombinationen daraus, was auch das Vorsehen mehrerer Buchstaben, Abbildungen oder Zahlen umfasst. Somit sind Designs und Muster jeder Art möglich. Auch internationale, z.B. asiatische, insbesondere chinesische, japanische, indische oder arabische, Buchstaben, sind möglich. Hierdurch wird eine besonders hohe Marktakzeptanz, insbesondere auch auf dem Weltmarkt, erzielt. Weiterhin können die Abbildungen farbig oder schwarz-weiß sein.

Weiter vorteilhaft ist das Dekorelement von einer inneren Oberfläche der ersten Kunststoffkomponente eingefasst. Dies bedeutet, dass eine in Richtung des Dekorelements gerichtete Seite der ersten Kunststoffkomponente das Dekorelement beispielsweise an dessen Oberfläche vollständig abdeckt und auch dessen Randbereich umgibt. Die Gesamtoberfläche des Anzeigeelements wird somit, bis auf die gespritzten Symboliken des zweiten Kunststoffelements, ausschließlich durch das erste Kunststoffelement gebildet. Dadurch können etwaige Kanten, beispielsweise Schleifkanten, die am Dekorelement vorhanden sind, abgedeckt werden. Somit erhöht die Einfassung des Dekorelements durch die innere Oberfläche der Kunststoffkomponente die Anwendersicherheit bei Optimierung der haptischen Eigenschaften. Der ansprechende optische Beitrag des Dekorelements bleibt in diesem Fall dennoch durch die nichteingefasste Fläche des Dekorelements erhalten.

Um ein mechanisch noch stabileres Anzeigeelement bereitzustellen, ist das Mehrkomponenten-Kunststoffelement vorteilhaft in einer Aussparung des Dekorelements angeordnet. Hierbei kommt eine mechanisch noch stabilere formschlüssige Verbindung zwischen dem Mehrkomponenten-Kunststoffelement und insbesondere den Wänden der Aussparung zustande.

Weiterhin vorteilhaft ist eine gleichzeitige Anordnung des Mehrkomponenten-Kunststoffelements in der Aussparung, die gemeinsam mit der Einfassung des Kunststoffelements realisiert wird, um eine zusätzliche mechanische Stabilität des Anzeigeelements zu schaffen. Die Aussparung kann z.B. eine Halbkugelform, eine Sacklochbohrung, eine Teilellipsoidenform oder weitere geometrische dreidimensionale Formen umfassen und kann mit herkömmlichen Techniken wie beispielsweise Bohren oder Schleifen oder Fräsen erzeugt werden.

Ferner erfindungsgemäß wird auch ein Verfahren zur Herstellung eines wie vorstehend beschriebenen Anzeigeelements offenbart. Das Verfahren umfasst in einem ersten Schritt ein Bereitstellen eines Dekorelements. Das Dekorelement kann, je nach Material, entsprechend vorbereitet sein. Dabei können beispielsweise Aussparungen, Dornen oder Löcher oder Kombinationen davon zur besseren Befestigung des Mehrkomponenten-Kunststoffelements am Dekorelement gebildet werden. Dadurch kann das Dekorelement auf einfache Weise in jeder Form, die für die jeweilige Anwendung notwendig ist, erhalten werden. Wie bereits zuvor ausgeführt, werden Dekorelemente als Grundkörper bzw. Träger verwendet, wobei diese eine hochwertige Optik und Haptik aufweisen.

In einem weiteren Schritt umfasst das Verfahren das Fertigen des Mehrkomponenten-Kunststoffelements und das Verbinden des Mehrkomponenten-Kunststoffelements mit dem Dekorelement. Dadurch ist das erfindungsgemäße Herstellungsverfahren in wenigen Schritten durchführbar und somit kosteneffizient. Durch das Verbinden des Mehrkomponenten-Kunststoffelements mit dem Dekorelement kommt eine stabile Verbindung zustande, was zu einem mechanisch stabilen Anzeigeelement führt.

Das Verbinden des Mehrkomponenten-Kunststoffelement mit dem Dekorelement kann vorteilhaft durch stoffschlüssige und/oder formschlüssige Verbindungen erfolgen, wobei ein mechanisch sehr stabiles und belastbares Anzeigeelement resultiert. Das Mehrkomponenten-Kunststoffelement kann beispielsweise formschlüssig mit einer Aussparung oder einem Dorn des Dekorelements oder einer Kombination davon verbunden werden.

Das Fertigen des Mehrkomponenten-Kunststoffelements umfasst entweder die Schritte des Spritzgießens der ersten Komponente und dann des Spritzgießens der zweiten Komponente oder die Schritte des Spritzgießens der zweiten Kunststoffkomponente und dann des Spritzgießens der ersten Kunststoffkomponente. Dabei wird die zweite Kunststoffkomponente in Form von Symboliken gespritzt, sodass diese von der ersten Kunststoffkomponente umgeben wird. Das Spritzgießen erfolgt dabei so, dass die zweite Kunststoffkomponente, zur besseren Kenntlichmachung der Symboliken an der Oberseite frei liegt. Die zweite Kunststoffkomponente ist damit formschlüssig und/oder stoffschlüssig und somit mechanisch sehr stabil befestigbar. Dadurch kann zudem eine hochwertige Optik und angenehme Haptik zwischen den Kunststoffkomponenten des Mehrkomponenten-Kunststoffelements und dem Dekorelement erhalten werden. Hierbei ist das Spritzgießen der ersten Kunststoffkomponente vor der zweiten Kunststoffkomponente insbesondere vorteilhaft, wenn es sich um einfache Symboliken handelt, die schnell und einfach gespritzt werden können. Handelt es sich hingegen um komplexe Symboliken, so wird vorteilhafterweise die zweite Kunststoffkomponente vor der ersten Kunststoffkomponente gespritzt, da sich bei längerer Bearbeitungsdauer ansonsten die Plastizität der ersten Kunststoffkomponente verändert und die mechanische Verbindung zwischen der ersten Kunststoffkomponente und der zweiten Kunststoffkomponente weniger stabil ist. Das Fixieren der zweiten Kunststoffkomponente kann hierbei beispielsweise mit einem Roboterarm erfolgen.

Das Spritzgießen ermöglicht eine hohe Variabilität hinsichtlich der Formen, der Muster, der Designs und der Farben des Mehrkomponenten-Kunststoffelements. So kann das Mehrkomponenten-Kunststoffelement beispielsweise farbige Abbildungen, Zahlen, Buchstaben oder ein Tag- oder ein Nachtdesign umfassen. Durch die Auswahl an Kunststoffprozess, Symbolikgeometrie und Material kann eine Vielzahl von Motiven durch das erfindungsgemäße Verfahren für ein Anzeigeelement präzise abgebildet werden. Dadurch kann das Verfahren für eine Vielzahl von Anzeigeelementen verwendet werden, ohne weitere Entwicklungsoptimierungen tätigen zu müssen. Durch die Entkopplung der Formung des Dekorelements und der Fertigung des Mehrkomponenten-Kunststoffelements können ferner Werkzeug- und Entwicklungskosten eingespart werden.

Das erfindungsgemäße Verfahren ist kostengünstig unter Einsparung von Werkzeug- und Entwicklungskosten und in wenigen Schritten durchführbar und ermöglicht die Herstellung eines Anzeigeelements mit hoher mechanischer Stabilität und einer qualitativ hochwertigen Haptik und ansprechenden Optik. Durch das erfindungsgemäße Verfahren kann zudem ohne hohen technischen Aufwand eine Vielzahl von Motiven für das Anzeigeelement hergestellt werden. Die Designvariabilität ist damit sehr hoch.

Ferner erfindungsgemäß wird auch eine Verwendung eines wie vorstehend offenbarten Anzeigeelements in einer Instrumententafel für Fahrzeuge oder in einem Gangwahlschalter für Fahrzeuge oder in einer Türverkleidung für Fahrzeuge angegeben.

Durch die erfindungsgemäße Verwendung können Instrumententafeln, Gangwahlschalter oder Türverkleidungen für Fahrzeuge mit hoher mechanischer Stabilität, qualitativ hochwertiger Haptik und ansprechender Optik, die auf kostengünstige Art und Weise herstellbar sind, bereitgestellt werden.

Ferner erfindungsgemäß wird auch ein Fahrzeug beschrieben, das das vorstehend offenbarte Anzeigeelement umfasst. Es zeichnet sich durch gute haptische und optische Eigenschaften aus.

Die für das erfindungsgemäße Anzeigeelement beschriebenen Vorteile, vorteilhaften Effekte und Weiterbildungen finden auch Anwendung auf das erfindungsgemäße Verfahren zur Herstellung eines Anzeigeelements, das erfindungsgemäße Fahrzeug und die erfindungsgemäße Verwendung eines Anzeigeelements.

Weitere Einzelheiten, Merkmale und Vorteile der Erfindung ergeben sich aus der nachfolgenden Beschreibung und den Figuren. Es zeigen:
- Figur 1: eine Schnittansicht eines Anzeigeelements gemäß einer ersten Ausführungsform.
- Figur 2: eine Schnittansicht eines Anzeigeelements gemäß einer zweiten Ausführungsform.
- Figur 3: eine schematisierte Darstellung eines Gangwahlschalters mit einem Anzeigeelement gemäß einer Ausführungsform.
- Figur 4: ein schematisches Ablaufdiagramm zur Veranschaulichung eines Verfahrens zur Herstellung eines Anzeigeelements gemäß einer Ausführungsform der Erfindung.

Die vorliegende Erfindung wird anhand von Ausführungsbeispielen im Detail erläutert. In den Figuren sind alle wesentlichen Merkmale der Erfindung dargestellt. Alle übrigen Merkmale sind der Übersichtlichkeit halber weggelassen. Ferner beziffern gleiche Bezugszeichen gleiche Elemente.

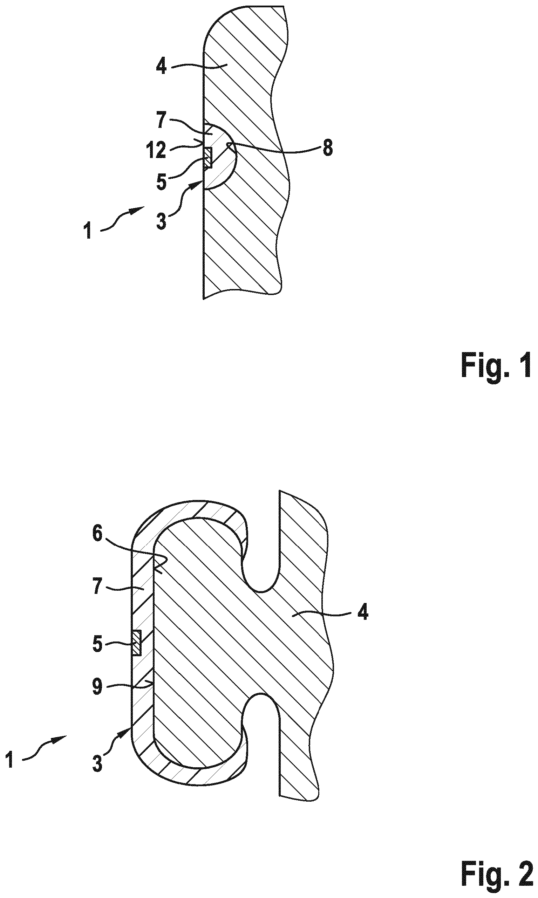

Figur 1 zeigt im Detail eine Schnittansicht eines Anzeigeelements 1 gemäß einer Ausführungsform der Erfindung. Das Anzeigeelement 1 ist insbesondere zur Anordnung in einem Fahrzeug, beispielsweise für eine Betätigungsvorrichtung in einer Instrumententafel, konzipiert und umfasst ein Dekorelement 4 mit einer Aussparung 8 in der ein Mehrkomponenten-Kunststoffelement 3 vorzugsweise stoffschlüssig und/oder formschlüssig angeordnet ist. Zur weiteren Befestigung des Mehrkomponenten-Kunststoffelements 3 können Dornen oder weitere Aussparungen, beispielsweise Bohrungen, oder eine Kombination davon verwendet werden (in der Figur nicht gezeigt). Hierdurch wird eine hohe mechanische Stabilität erreicht.

Das Dekorelement 4 umfasst Keramik, Holz, Holzfurnier, Glas, Stein oder eine Kombination davon, insbesondere Keramik, und kann durch bekannte Arten der Materialbearbeitung, wie z.B. Schleifen, Bohren, Drehen, Sägen oder Fräsen, in jede beliebige Form gebracht werden, wodurch die Haptik und die Optik des Anzeigeelements hochwertig gestaltbar sind.

Die Aussparung 8 liegt in Form einer Kavität im Dekorelement 4 vor und dient zur Verbindung des Dekorelements 4 mit dem Mehrkomponenten-Kunststoffelement 3. Die Aussparung 8 kann z.B. eine Halbkugelform, eine Sacklochbohrung, eine Teilellipsoidenform oder weitere geometrische dreidimensionale Formen umfassen und kann mit herkömmlichen Techniken, wie beispielsweise Bohren oder Schleifen oder Fräsen erzeugt, werden.

Das Mehrkomponenten-Kunststoffelement 3 umfasst eine erste Kunststoffkomponente 7 und eine zweite Kunststoffkomponente 5, wobei die zweite Kunststoffkomponente 5 von der ersten Kunststoffkomponente 7 derart umgeben ist, dass sie auf der Oberseite 12 des Anzeigeelements 1 freiliegt und in Form einer Symbolik vorliegt. Dies sorgt für eine angenehme Haptik und Optik. Hierbei gehen die beiden Kunststoffkomponenten 5, 7 vorzugsweise eine formschlüssige und/oder stoffschlüssige Verbindung miteinander ein, wodurch das Mehrkomponenten-Kunststoffelement sehr belastungsstabil ist. Beide Kunststoffkomponenten 5, 7 werden per Spritzguss eingebracht, wobei vorzugsweise die erste Kunststoffkomponente 7 für die formschlüssige Verbindung des Mehrkomponenten-Kunststoffelements 3 mit dem Dekorelement 4 sorgt. Hierzu können sämtliche Kunststoffe verwendet werden, die für Spritzgussverfahren infrage kommen, was sich vorteilhaft auf die Prozessökonomie auswirkt.

Die erste Kunststoffkomponente 7 und die zweite Kunststoffkomponente 5 weisen unterschiedliche Farben auf, wobei die erste Kunststoffkomponente 5 z.B. schwarz ist und die zweite Kunststoffkomponente 3 z.B. weiß ist oder umgekehrt, um die Symbolik besonders gut abzuheben. Hierbei kann einfach zwischen Tag- und Nachtdesign gewählt werden. Die Symboliken umfassen z.B. Buchstaben, Abbildungen, Zahlen oder Kombinationen davon, wodurch eine hohe Designvariabilität erreicht wird.

Figur 2 zeigt ein Anzeigeelement 1 im Schnitt, bei dem das Dekorelement 4 von einer inneren Oberfläche 6 der ersten Kunststoffkomponente 7 des Mehrkomponenten-Kunststoffelements 3, vorzugsweise formschlüssig, eingefasst ist. Die erste Kunststoffkomponente 7 bedeckt damit mindestens einen Teilbereich einer Oberfläche 9 des Dekorelements 4. Der angenehme optische Eindruck des Dekorelements bleibt außerhalb der eingefassten Fläche nichtsdestotrotz vorhanden. Dies wird erreicht, indem die erste Kunststoffkomponente 5 auf die entsprechend geformte Oberfläche 9 des Dekorelements 4 aufgespritzt wird.

Das Anzeigeelement 1 aus Figur 2 zeichnet sich durch eine hohe mechanische Stabilität, eine einfache und kostengünstige Herstellbarkeit und eine hochqualitative Haptik und Optik aus.

Vorteilhaft können in einer alternativen Ausführungsform die Einfassung des Dekorelements 4 durch die innere Oberfläche 6 der ersten Kunststoffkomponente 7 und die Anordnung des Mehrkomponenten-Kunststoffelements 3 in der Aussparung 8 kombiniert werden, um eine noch höhere mechanische Stabilität zu erreichen (nicht in den Figuren gezeigt).

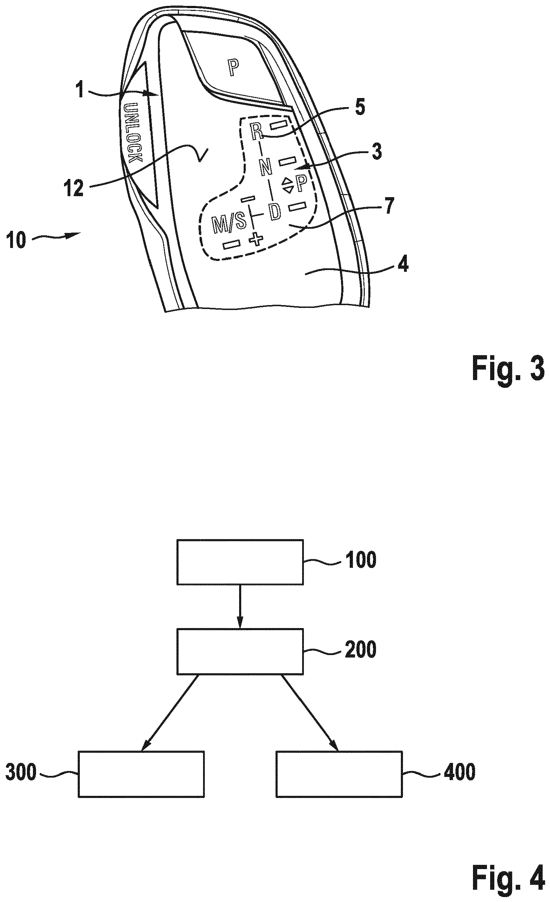

Figur 3 zeigt einen Gangwahlschalter 10, der ein Dekorelement 4 umfasst. Ein Mehrkomponenten-Kunststoffelement 3, umfassend eine erste Kunststoffkomponente 7 und eine zweite Kunststoffkomponente 5, bildet zusammen mit dem Dekorelement 4 ein Anzeigeelement 1, das als Schaltdisplay für den Gangwahlschalter 10 dient. Die zweite Kunststoffkomponente 5, liegt in Form von gespritzten Symboliken, nämlich Zahlen, Buchstaben und Mustern vor und ist dadurch, dass die an der Oberseite 12 des Anzeigeelements 1 frei liegt, optisch gut zu erkennen. Durch das Einfassen der zweiten Kunststoffkomponente 5 durch die erste Kunststoffkomponente 7 werden die gespritzten Symboliken sehr gut in Form und Dimension stabilisiert. Dadurch kann eine hohe Designvariabilität, eine hohe mechanische Stabilität und eine qualitativ hochwertige Haptik und Optik erreicht werden. Das Anzeigeelement 1 kann zudem wie in den Ausführungsformen der Figuren 1 und 2 ausgebildet sein.

Im Detail gibt Figur 4 eine Übersicht über Verfahrensschritte eines Verfahrens zur Herstellung eines Anzeigeelements 1 gemäß einer Ausführungsform der Erfindung. In einem ersten Schritt 100 wird das Dekorelement 4 bereitgestellt. Hierzu kann das Dekorelement 4 vorab in eine entsprechende Form gebracht werden, was z.B. mittels herkömmlicher Verfahren, beispielsweise durch Drehen, Fräsen, Bohren, Sägen oder mittels 3D-Druck erfolgen kann, wodurch einen hohes Einsparungspotential für den Prozess vorhanden ist.

In einem zweiten Schritt 200 wird ein Mehrkomponenten-Kunststoffelement 3 gefertigt und mit dem Dekorelement 4 durch eine formschlüssige und/oder stoffschlüssige und/oder kraftschlüssige Verbindung verbunden, wodurch eine hohe mechanische Stabilität sowie eine gute Haptik und eine angenehme Optik gewährleistet werden.

Dies kann zum einen durch Schritt 300 erfolgen, der zunächst ein Spritzgießen der ersten Kunststoffkomponente 7 und dann ein Spritzgießen der zweiten Kunststoffkomponente 5 umfasst. Hierbei bildet die zweite Kunststoffkomponente 5 die Symboliken in einer Oberseite der ersten Kunststoffkomponente 7, welche die zweite Kunststoffkomponente 5 insbesondre form- und/oder stoffschlüssig umgibt, wodurch eine ansprechende Haptik und Optik und eine gute mechanische Stabilität erzeugt werden. Hierbei wird die erste Kunststoffkomponente 7 an der Oberfläche des Dekorelements 4 z.B. mit einer formschlüssigen Verbindung befestigt. Die Verbindung oder Befestigung kann beispielsweise durch Dornen am Dekorelement 4, einer Aussparung im Dekorelement 4 oder durch Einfassung des Dekorelements 4 oder eine Kombination davon erfolgen.

Alternativ kann das Verfahren über Schritt 400 verlaufen, der zunächst ein Spritzgießen der zweiten Kunststoffkomponente 5 und dann ein Spritzgießen der ersten Kunststoffkomponente 7 vorsieht. Hierbei kann die zweite Kunststoffkomponente 5 fixiert werden, beispielsweise mit einem Roboterarm, wonach sie mit der ersten Kunststoffkomponente 7 hinterspritzt wird, wodurch eine formschlüssige und/oder stoffschlüssige Verbindung entsteht. Die Verbindung oder Befestigung erfolgt insbesondere wie in der vorgenannten Alternative.

Durch das Spritzgießen sind geringe Herstellungs- und Entwicklungskosten und eine ansprechende Optik und Haptik bezüglich des Mehrkomponenten-Kunststoffelements 3 möglich. Weiterhin sind einfache Modifikationen für eine Vielzahl von Formen, Mustern und Designs realisierbar.

Somit kann ein kostengünstiges und einfaches Verfahren bereitgestellt werden, durch das ein mechanisch sehr stabiles Anzeigeelement 1 mit einer qualitativ hochwertigen Haptik sowie ansprechenden Optik herstellbar ist. Das Verfahren ermöglicht zudem eine Vielzahl von Modifikationen bezüglich Designs, Muster, Farben und Formen des Anzeigeelements 1.

### Bezugszeichenliste:

- 1: Anzeigeelement
- 3: Mehrkomponenten-Kunststoffelement
- 4: Dekorelement
- 5: zweite Kunststoffkomponente
- 6: Innere Oberfläche
- 7: erste Kunststoffkomponente
- 8: Aussparung
- 9: Oberfläche des Dekorelements
- 10: Gangwahlschalter
- 12: Oberseite des Anzeigeelements
- 100: Verfahrensschritt
- 200: Verfahrensschritt
- 300: Verfahrensschritt
- 400: Verfahrensschritt

## Patentansprüche

1. Anzeigeelement (1), insbesondere für Fahrzeuge, umfassend:
- ein Dekorelement (4); und
- ein Mehrkomponenten-Kunststoffelement (3), wobei das Mehrkomponenten-Kunststoffelement (3) mit dem Dekorelement (4) verbunden ist, wobei, das Mehrkomponenten-Kunststoffelement (3) eine erste Kunststoffkomponente (7) und eine zweite Kunststoffkomponente (5) aufweist, wobei die zweite Kunststoffkomponente (5) in Form von gespritzten Symboliken vorliegt und von der gespritzten ersten Kunststoffkomponente (7) umgeben ist, **dadurch gekennzeichnet, dass** die erste Kunststoffkomponente (7) und die zweite Kunststoffkomponente (5) an einer Oberseite (12) des Anzeigeelements (1) freiliegen, wobei die erste Kunststoffkomponente (7) und die zweite Kunststoffkomponente (5) unterschiedliche Farben aufweisen, und wobei die zweite Kunststoffkomponente (5) schwarz und die erste Kunststoffkomponente (7) weiß ist oder die erste Kunststoffkomponente (7) schwarz und die zweite Kunststoffkomponente (5) weiß ist.

2. Anzeigeelement nach Anspruch 1, wobei das Dekorelement (4) Keramik, Holz, Holzfurnier, Glas, Stein, oder eine Kombination davon umfasst.

3. Anzeigeelement nach Anspruch 1 oder 2, wobei das Dekorelement (4) aus Keramik besteht.

4. Anzeigeelement nach einem der vorhergehenden Ansprüche, wobei die gespritzten Symboliken eine Abbildung, einen Buchstaben, eine Zahl oder Kombinationen daraus umfassen.

5. Anzeigeelement nach einem der vorhergehenden Ansprüche, wobei das Dekorelement (4) von einer inneren Oberfläche (6) der ersten Kunststoffkomponente (7) eingefasst ist.

6. Anzeigeelement nach einem der Ansprüche 1 bis 4, wobei das Mehrkomponenten-Kunststoffelement (3) in einer Aussparung (8) des Dekorelements (4) angeordnet ist.

7. Verfahren zur Herstellung eines Anzeigeelements (1) nach einem der Ansprüche 1 bis 6, umfassend:
- (100) Bereitstellen eines Dekorelements (4);
- (200) Fertigen des Mehrkomponenten-Kunststoffelements (3) und Verbinden des Mehrkomponenten-Kunststoffelements (3) mit dem Dekorelement (4) umfassend:
- (300) Spritzgießen der ersten Kunststoffkomponente (7) und dann Spritzgießen der zweiten Kunststoffkomponente (5); oder
- (400) Spritzgießen der zweiten Kunststoffkomponente (5) und dann Spritzgießen der ersten Kunststoffkomponente (7), wobei, die erste Kunststoffkomponente (7) und die zweite Kunststoffkomponente (5) an einer Oberseite (12) des Anzeigeelements (1) freiliegen.

8. Verwendung eines Anzeigeelements (1) nach einem der Ansprüche 1 bis 6 in einer Instrumententafel für Fahrzeuge oder in einem Gangwahlschalter (10) für Fahrzeuge oder in einer Türverkleidung für Fahrzeuge.

9. Fahrzeug umfassend mindestens ein Anzeigeelement (1) nach einem der Ansprüche 1 bis 6.

## Claims

1. Display element (1), in particular for vehicles, comprising:
- a decorative element (4); and
- a multi-component plastic element (3), wherein the multi-component plastic element (3) is connected to the decorative element (4), wherein
the multi-component plastic element (3) has a first plastic component (7) and a second plastic component (5), wherein the second plastic component (5) is present in the form of injection-moulded symbols and is enclosed by the first, injection-moulded plastic component (7), **characterized in that** the first plastic component (7) and the second plastic component (5) are exposed on an upper side (12) of the display element (1), wherein the first plastic component (7) and the second plastic component (5) are of different colours, and
wherein the second plastic component (5) is black and the first plastic component (7) is white or the first plastic component (7) is black and the second plastic component (5) is white.

2. Display element according to Claim 1, wherein the decorative element (4) comprises ceramic material, wood, wood veneer, glass, stone or a combination thereof.

3. Display element according to Claim 1 or 2, wherein the decorative element (4) consists of ceramic material.

4. Display element according to one of the preceding claims, wherein the injection-moulded symbols comprise an image, a letter, a number or combinations thereof.

5. Display element according to one of the preceding claims, wherein the decorative element (4) is surrounded by an inner surface (6) of the first plastic component (7).

6. Display element according to one of Claims 1 to 4, wherein the multi-component plastic element (3) is arranged in a cutout (8) of the decorative element (4) .

7. Method for producing a display element (1) according to one of Claims 1 to 6, comprising:
- (100) providing a decorative element (4);
- (200) manufacturing the multi-component plastic element (3) and connecting the multi-component plastic element (3) to the decorative element (4), comprising:
- (300) injection moulding the first plastic component (7) and then injection moulding the second plastic component (5); or
- (400) injection moulding the second plastic component (5) and then injection moulding the first plastic component (7), wherein
the first plastic component (7) and the second plastic component (5) are exposed on an upper side (12) of the display element (1).

8. Use of a display element (1) according to one of Claims 1 to 6 in an instrument panel for vehicles or in a gear-selector switch (10) for vehicles or in a door-trim panel for vehicles.

9. Vehicle comprising at least one display element (1) according to one of Claims 1 to 6.

## Revendications

1. Élément d'affichage (1), destiné notamment à des véhicules, ledit élément d'affichage comprenant :
- un élément décoratif (4) ; et
- un élément en matière synthétique multi-composants (3), l'élément en matière synthétique multi-composants (3) étant relié à l'élément décoratif (4), l'élément en matière synthétique multi-composants (3) comportant un premier composant en matière synthétique (7) et un deuxième composant en matière synthétique (5), le deuxième composant en matière synthétique (5) étant présent sous la forme de symboles moulés par injection et étant entouré par le premier composant en matière synthétique moulé par injection (7), **caractérisé en ce que** le premier composant en matière synthétique (7) et le deuxième composant en matière synthétique (5) sont exposés sur une face supérieure (12) de l'élément d'affichage (1), le premier composant en matière synthétique (7) et le deuxième composant en matière synthétique (5) ayant des couleurs différentes, et
le deuxième composant en matière synthétique (5) étant noir et le premier composant en matière synthétique (7) étant blanc ou le premier composant en matière synthétique (7) étant noir et le deuxième composant en matière synthétique (5) étant blanc.

2. Élément d'affichage selon la revendication 1, l'élément décoratif (4) comprenant de la céramique, du bois, du placage de bois, du verre, de la pierre, ou une combinaison de ceux-ci.

3. Élément d'affichage selon la revendication 1 ou 2, l'élément décoratif (4) étant en céramique.

4. Élément d'affichage selon l'une des revendications précédentes, les symboles moulés par injection comprennent une image, une lettre, un chiffre ou des combinaisons de ceux-ci.

5. Élément d'affichage selon l'une des revendications précédentes, l'élément décoratif (4) étant encadré par une surface intérieure (6) du premier composant en matière synthétique (7).

6. Élément d'affichage selon l'une des revendications 1 à 4, l'élément en matière synthétique multi-composants (3) est disposé dans un évidement (8) de l'élément décoratif (4).

7. Procédé de fabrication d'un élément d'affichage (1) selon l'une des revendications 1 à 6, ledit procédé comprenant les étapes suivantes :
- (100) fournir un élément décoratif (4) ;
- (200) fabriquer l'élément en matière synthétique multi-composants (3) et relier l'élément en matière synthétique multi-composants (3) à l'élément décoratif (4) :
- (300) mouler par injection le premier composant en matière synthétique (7) puis mouler par injection le deuxième composant en matière synthétique (5) ; ou
- (400) mouler par injection le deuxième composant en matière synthétique (5) puis mouler par injection le premier composant en matière synthétique (7), le premier composant en matière synthétique (7) et le deuxième composant en matière synthétique (5) étant exposés sur une face supérieure (12) de l'élément d'affichage (1).

8. Utilisation d'un élément d'affichage (1) selon l'une des revendications 1 à 6 dans le tableau de bord de véhicules ou dans le sélecteur de vitesses (10) de véhicules ou dans l'habillage de porte de véhicules.

9. Véhicule comprenant au moins un élément d'affichage (1) selon l'une des revendications 1 à 6.
